# EUROPEAN PATENT SPECIFICATION

(11) **EP 0 846 420 B1**
(45) Date of publication and mention of the grant of the patent: **08.05.2002**
(21) Application number: 97309820.5
(22) Date of filing: 04.12.1997
(51) Int. Cl.: A21C 9/08, A21C 3/06

(54) **Apparatus and method for conveying pieces of dough**
Vorrichtung und Verfahren zum Transport von Teigstücken
Dispositif et procédé pour transporter de morceaux de pâte

(30) Priority: 04.12.1996 JP 32429296
(43) Date of publication of application: 10.06.1998
(73) Proprietor: Rheon Automatic Machinery Co., Ltd., Utsunomiya-shi Tochigi Prefecture (JP)
(72) Inventor: Ueno, Sadao, Utsunomiya-shi, Tochigi Prefecture (JP); Kuwabara, Hitoshi, Utsunomiya-shi, Tochigi Prefecture (JP)
(74) Representative: Leale, Robin George

(56) References cited:
- EP-A- 0 382 105
- EP-A- 0 482 917
- EP-A- 0 569 103
- EP-A- 0 670 114
- BE-A- 902 440
- GB-A- 2 045 195

## Description

This invention relates to an apparatus and method for conveying pieces of dough (for example croissant dough) which are each, for example, in the shape of a triangle or trapezoid. In this specification the term "longitudinal direction" means the direction in which pieces of dough are conveyed on a conveyor, while the term "transverse" means a direction transverse to the longitudinal direction.

In JP-A-4 158 732 we disclose such an apparatus for longitudinally conveying triangular pieces of dough (croissant dough). In such apparatus an upstream conveyor and a downstream conveyor are longitudinally aligned to longitudinally convey pieces of dough. The upstream conveyor conveys a plurality of pieces of dough which are arranged in groups extending transversely, and in which the dough pieces of alternate ones of said groups have their positions reversed; in other words the base sides of all the triangular pieces of dough of a first group (transverse row) face in one transverse direction while the base sides of all of the triangular piece of dough of the next group face in the other transverse direction. The downstream conveyor longitudinally conveys the pieces of dough while they are being separated from each other and are being rearranged with all of their bases facing downstream.

At the junction of the upstream and downstream conveyors (i.e. where the discharge end of the upstream conveyor meets the receiving end of the downstream conveyor) a device for separating the pieces of dough from each other and a device for rotating the separated pieces of dough are arranged, longitudinally spaced from each other. The device for separating the pieces of dough includes a plurality of separating holders, each of which holds a piece of dough from above. Such device arranges each successive group of pieces of dough transversely in a staggered layout. The device for rotating the pieces of dough includes a plurality of rotating holders, each of which holds down and rotates a piece of dough. Such device rotates each group of pieces of dough through 90 degrees, alternately clockwise and counterclockwise, so that the bases of the triangular pieces of dough of all the groups then face downstream.

Thus, when the upstream conveyor is operated, it longitudinally and sequentially conveys the pieces of dough, which are alternately reversely positioned group-by-group, and discharges them from its discharge end to the receiving end of the downstream conveyor. As a group of pieces of dough are so discharged, they are held from above and separated by the separating holders so as to be transversely rearranged in a staggered layout, and are then released. Then, when the pieces of dough of the group have been held and rotated clockwise or counterclockwise by the rotating holders so that they face downstream, they are again released.

In this known apparatus it can happen that the pieces of dough are unintentionally changed in their layout when they are being transferred from the separating holders to the rotating holders. This causes a problem in that it is complicated to correct the positions of the pieces of dough one they have been carried downstream. Further, since the devices for separating and rotating the pieces of dough are longitudinally spaced, this causes a problem in that they occupy a large longitudinal space.

EP-A-0382105 discloses a method of conveying pieces of dough, each of which has a base side, by means of an upstream conveyor and a longitudinally adjacent downstream conveyor, the dough pieces being arranged in contiguous transverse rows on the upstream conveyor with the base sides of the dough pieces facing in opposite transverse directions in each successive row, the method including the step of sequentially conveying the dough pieces row by row from a discharge end of the upstream conveyor to a receiving end of the downstream conveyor.

The present invention is characterised by the steps of separating each transverse row of dough pieces from the succeeding rows as the rows are being conveyed to the said receiving end, while simultaneously arranging the dough pieces of said separated row in a transversely staggered layout and rotating them through substantially 90 degrees so that the said base of each dough piece faces downstream.

EP-A-0382105 further discloses apparatus for conveying pieces of dough, each of which has a base side, from an upstream conveyor on which the dough pieces are arranged in contiguous transverse rows with the base sides of the dough pieces facing in opposite transverse directions in each successive row, to a longitudinally adjacent downstream conveyor, the apparatus comprising:
a first carriage and a second carriage mounted for longitudinal movement at the junction of the said upstream and downstream conveyors;
means for longitudinally reciprocating the said first and second carriages in phase such that the reciprocating strokes of the first carriage are longer than those of the second carriage;
first holders mounted on the said first carriage for rotation about a vertical axis to hold and rotate a piece of dough;
second holders, mounted on the said second carriage for rotation about a vertical axis to hold and rotate a piece of dough;
and a rotating mechanism for rotating the said first and second holders through substantially 90 degrees.

The present invention is characterised in that the said first holders are mounted on one side of the said first carriage to hold and rotate some of the pieces of dough of each row while the said second holders are mounted on one side of the said second carriage to hold and rotate the remaining pieces of the dough of the row, the said first and second holders being transversely aligned;
and the said rotating mechanism being arranged to rotate the said first and second holders through substantially 90 degrees in opposite directions per forward stroke of the first and second holders while the first and second carriages are longitudinally reciprocated a plurality of times, so that each row is separated from the succeeding rows and simultaneously the dough pieces of each said separated row are separated from each other and positioned in a transversely staggered layout while being rotated through substantially 90 degrees in opposite directions row by row.

An embodiment of the invention will now be described by way of example and with reference to the accompanying drawings, in which:-
Fig. 1 is a plan view of one side of an apparatus according to the invention;
Fig. 2 is a plan view of the other side of the apparatus of Fig. 1;
Fig. 3 is a partly sectional side view taken along line III-III in Fig. 1;
Fig. 4 is a partly sectional side view taken along line IV-IV in Fig. 2;
Fig. 5 is a plan view to show the separation and rotation of longitudinally and transversely arranged pieces of dough; and
Fig. 6 is a timing chart for some elements of devices for separating and rotating the pieces of dough.

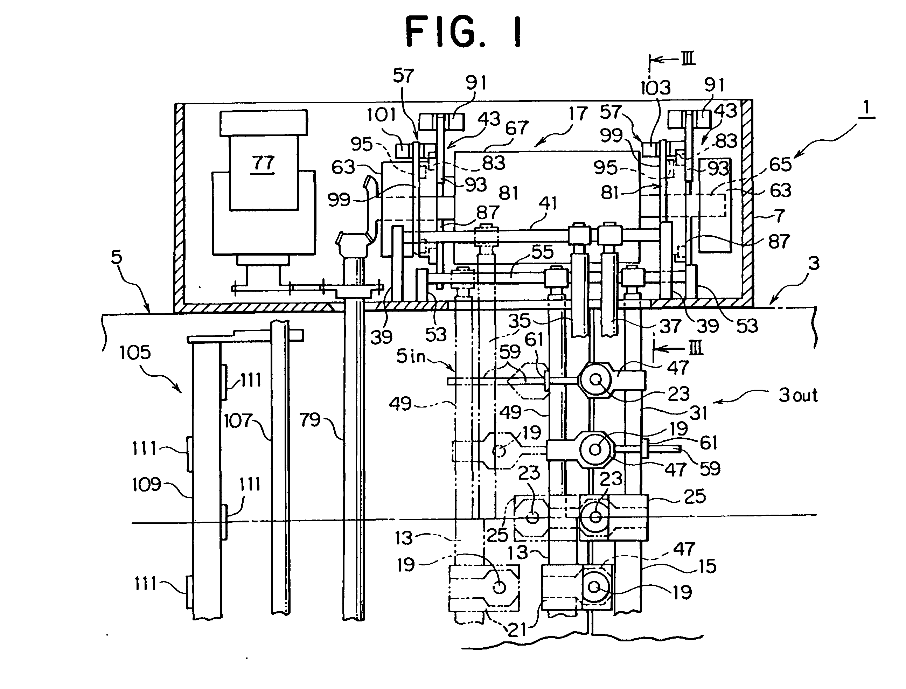

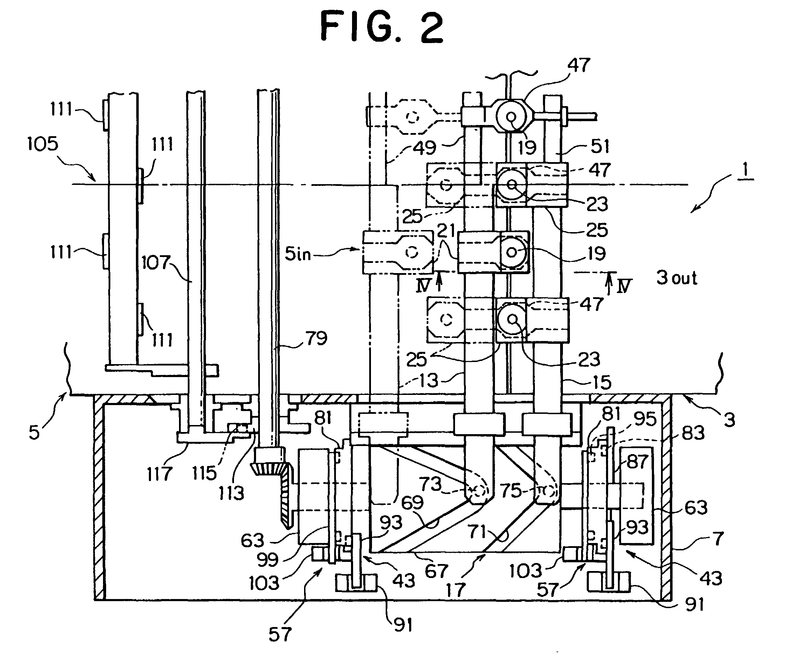

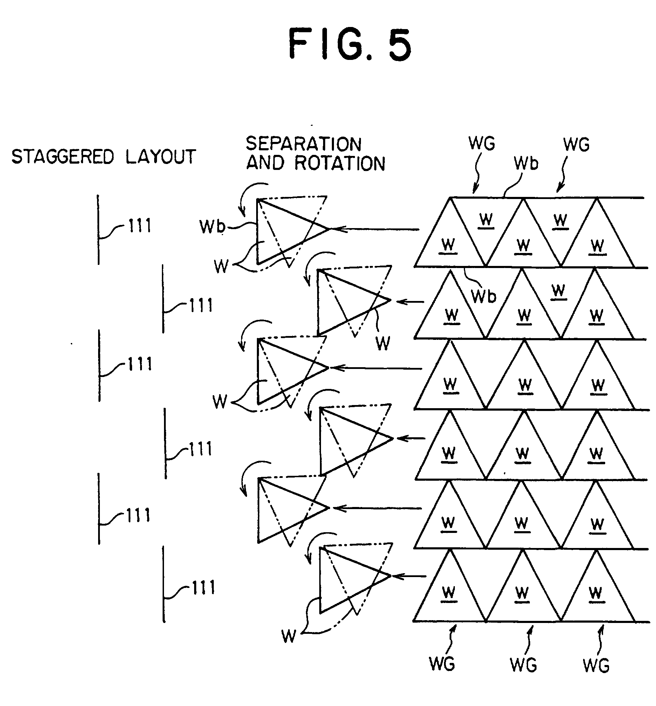

With reference to Figs. 1, 2, 3 and 5, the apparatus 1, which separates and longitudinally conveys longitudinally and transversely adjacent pieces of dough W, includes an upstream conveyor 3 and a downstream conveyor 5. The conveyors 3, 5 are longitudinally aligned. In the embodiment each piece of dough W is triangular (for example as used for making croissants) and has a base side Wb. However, the shape of the dough may be trapezoidal or of any other shape. As shown in Fig. 5, triangular pieces of dough W are arranged in transversely extending groups (rows) WG. The base Wb of each piece of dough W of a first group WG faces to one side, while the base Wb of each piece of dough W of the next group WG faces to the opposite side. Thus the groups of pieces of dough are alternately reversed in position relative to each other.

The upstream conveyor 3 longitudinally conveys the pieces of dough where they are adjacent to each other, as shown at the right side in Fig. 5. The downstream conveyor 5 longitudinally conveys the pieces of dough when the pieces of dough of a group have been separated from each other and from the remaining groups, with the bases Wb of the pieces of dough W all facing downstream. As is known from JP-A-4 158 732, the downstream conveyor 5 operates at a faster speed than the upstream conveyor 3.

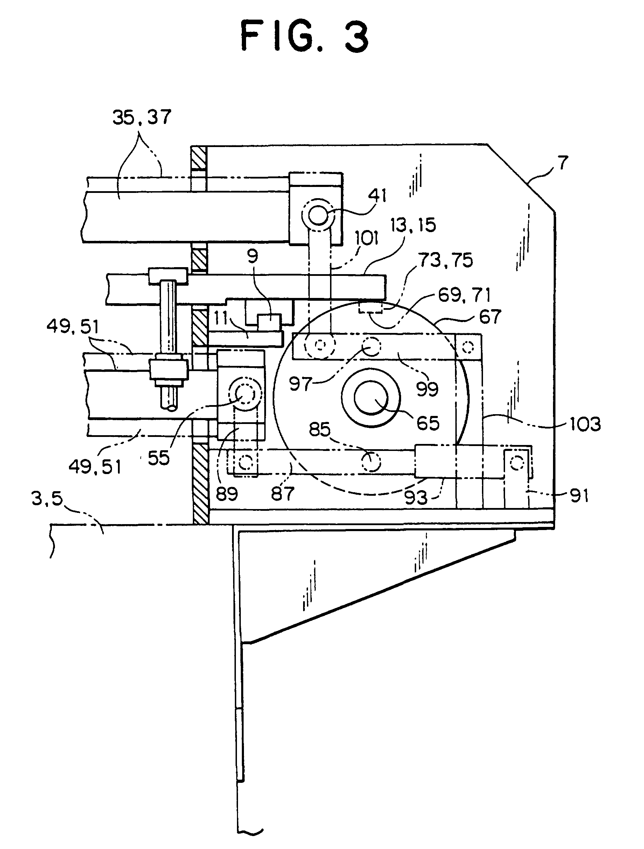

At the junction of the upstream and downstream conveyors 3, 5 (i.e. where the discharge end (3 out) of the upstream conveyor 3 meets the receiving end (5 in) of the downstream conveyor 5), a pair of support frames 7,7 are mounted. A longitudinally extending guide rail 9 (Fig. 3) is mounted on each frame 7 through a fixing bracket 11. Transversely extending first and second carriages 13 and 15, which are longitudinally spaced apart, are mounted on the pair of guide rails 9,9 so that both carriages 13, 15 can move longitudinally. The first and second carriages 13,15 are moved in synchronized reciprocating motions by a reciprocally operating device 17 so that the longitudinal reciprocating strokes (forward and return strokes) of the first carriage 13 are longer than those of the second carriage 15.

With reference to Figs. 1, 2, 3 and 4, a plurality of first holders 19 for holding a group of pieces of dough W from above are rotatably mounted on the upstream side of the first carriage 13 through corresponding fixing blocks 21, while a plurality of second holders 23 are rotatably mounted on the downstream side of the second carriage 15 through corresponding fixing blocks 25. The first and second holders 19,23 are aligned transversely.

Each holder 19 or 23 has a support pipe 27 rotatably mounted on the fixing block 21 or 25, an ejector 29 mounted on the distal end of the support pipe 27, a pin rod 31 disposed for vertical movement in the support pipe 27, and a plurality of pins 33 mounted on the lower end of the pin rod 31 for penetrating a piece of dough from above. These pin rods 31 of the first holders 19 are connected by a first pin-rod-connecting bar 35, which extends transversely, and similarly the pin rods 31 of the second holders 23 are connected by a second pin-rod-connecting bar 37 which extends transversely. Each pin-rod-connecting bar 35 or 37 is mounted for longitudinal movement at its ends on guide rods 41,41, which are mounted for vertical movement on the support frames 7,7 through support arms 39,39 (only one guide rod 41 is shown in Fig. 1). By means of a pin-rod-operating device 43 (as explained below), the first and second holders 19,23 can lower the pin-rod-connecting bars 35,37 to cause the penetrating pins 33 to extend downward through the ejectors 29, or can raise the bars 35,37 to retract the pins 33 upward from the ejectors 29.

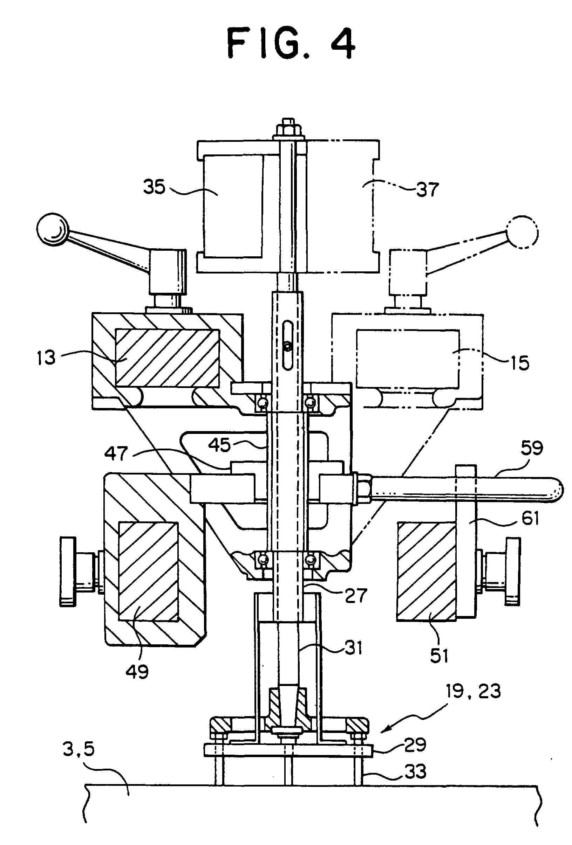

A screw member 45 is secured to each holder 19 or 23 (Fig. 4), and a nut 47, which is vertically movable, is threaded on the screw member 45. The nuts 47 of the holders 19,23 are connected by connecting bars 49,51 which move the screw members 45 to rotate the holders. For longitudinal movement, the connecting bars 49,51, at both of their ends, are mounted on guide rods 55,55, which in turn are mounted on the support frames 7,7 through brackets 53, 53 (only one guide rod 55 being shown in Fig. 1). The holders 19,23 are rotated clockwise or counterclockwise through 90 degrees by a rotating mechanism 57 during the longitudinal reciprocation of the first and second carriages 13, 15, such that the holders 19,23 change the direction in which they rotate while being connected to the carriages and in association with every longitudinal and forward movement of the carriages. A sliding shaft 59, which extends longitudinally, is attached to each nut 47, and a guide plate 61, which guides the longitudinal sliding of the sliding shaft 59, is attached to the connecting bar 49 or 51, as shown in Figs. 1 and 4.

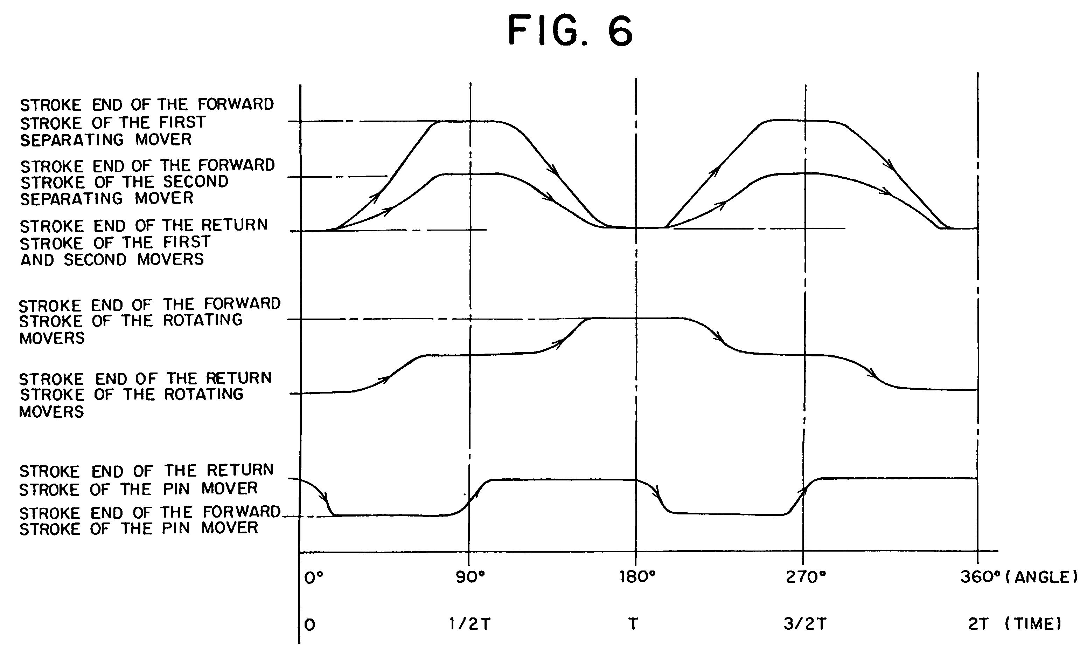

The reciprocally operating device 17 will now be described in detail. In Figs. 1 to 3 a pair of support members 63,63, which are longitudinally spaced apart from each other, are mounted on each support frame 7. A rotary shaft 65, which extends longitudinally, is journalled in the pair of support members 63, 63 of each support frame 7. A cylindrical separating cam 67 is secured on the rotary shaft 65. First and second separating cam grooves 69,71 are formed in the cylindrical surface wall of the cam 67. The first separating cam groove 69 receives and supports a first separating mover (cam follower) 73 so that the mover 73 can move longitudinally. The mover 73 is connected to one end of the first carriage 13. The second separating cam groove 71 receives and supports a second separating mover 75 so that the mover 75 can move longitudinally. The mover 75 is connected to one end of the second carriage 15. The shapes of the first and second separating cam grooves 69,71 are such that the longitudinal reciprocating strokes of the first separating mover 73 (i.e., the first carriage 13) are longer than those of the second separating mover 75 (i.e., the second carriage 15), as shown in Fig. 6.

To rotate the rotary shafts 65, a drive motor 77 is mounted on one of the support frames 7, and a drive shaft 79, which extends transversely and which is mounted on the frames 7,7 downstream of the carriages 13,15, is connected to the motor 77. Each end of the drive shaft 79 is connected to a respective end of each rotary shaft 65.

The mechanism 57 which moves the nuts 47 will now be described in detail. A pair of multiple cams 81, each of which is concentric with a respective rotary shaft 65, are integrally fixed to such shaft, as shown in Fig. 1. Each multiple cam 81 has two plane groove cams, one of which is a rotating cam groove 83 located at its right side (Fig. 1). The rotating cam groove 83 receives and supports a rotating mover 85 (Fig. 3) such that it can move vertically in the groove 83. The rotating mover 85 is connected to the connecting bars 49,51 through a pair of links 87,89 and the guide rod 55. The proximal end of the link 87 is connected to an auxiliary link 93, which for vertical movement is pivotably mounted on a support block 91 so that the link 87 can move laterally relative to the auxiliary link 93. The shape of the rotating cam groove 83 is such that during two longitudinal reciprocating strokes of the separating movers 73,75, as in Fig. 6, the rotating mover 85 moves vertically from the return stroke end of its forward stroke to the middle of the forward stroke by the time the separating movers 73,75 start their first forward strokes and reach their first forward stroke end, and the rotating mover 85 moves vertically from the forward stroke end of its return stroke to the middle of the return stroke by the time the separating movers 73,75 start their second forward strokes after they complete their first return strokes and reach their second forward stroke end.

The pin-rod-operating device 43 will now be described in detail. The multiple cam 81 acts as a plane groove cam which rotates the holders 19,23 and acts as another plane groove cam which vertically moves the penetrating pins 33. Each multiple cam 81 is provided with a pin cam groove 95 at the left side of the rotating cam groove 83. The pin cam groove 95 receives and supports a pin mover 97, which is connected to the connecting bars 35,37 through a pair of links 99,101 and the guide rod 41. The proximal end of the link 99 is connected to a support block 103, which is, for vertical movement, pivotably mounted on the support frame 7.

According to this structure, holders 19,23 hold and release the pieces of dough W as explained below. Before the carriages 13,15 (i.e., separating movers 73,75) start their forward strokes from their return stroke ends, the multiple cams 81 and separating cams 67 are rotated to lower the pin movers 97 to cause the penetrating pins 33 of the holders 19,23 to project from the ejectors 29. Thus these pins 33 penetrate and hold the pieces of dough W.

Further, before the carriages 13,15 (i.e., the separating movers 73,75) start their return strokes from their forward stroke end, the multiple cams 81 and separating cams 67 are rotated to raise the pin movers 97 to cause the penetrating pins 33 to retract into the ejectors 29, thereby releasing the pieces of dough W from the pins 33.

A reverse-driven shaft 107, which extends transversely, is mounted downstream of the carriages 13, 15. Another reverse-driven shaft 109, which also extends transversely, is attached to the shaft 107. A plurality of positioning plates 111, arranged in a staggered layout, are attached to the shaft 109 so that they can receive the triangular pieces of dough W at their bases Wb, which are in the staggered layout. To vertically rotate the shaft 109 through the shaft 107 in unison with the rotation of the separating cams 67, a cam 113, comprised of a plate cam, is attached to each end of the drive shaft 79, and a reverse-driven link 117, provided with a mover 115 that rotates vertically, is attached to each end of the shaft 107.

The operation of the apparatus 1 will now be described. When the groups WG of pieces of dough W (Fig 5) are conveyed on the upstream conveyor 3 and passed to the downstream conveyor 5, the first and second holders 19,23 hold a group of the pieces of dough. By operating the motor 77 the separating cams 67 are rotated to laterally move the first and second separating movers 73,75 in their forward strokes. As already explained, the reciprocating strokes of the first separating movers 73 are longer than those of the second separating movers 75, and they move in phase in their forward strokes. Accordingly, the pieces of dough W of the group are separated and located in a transversely staggered layout. The pieces of dough are then released, and by operating the motor 77 the separating cams 67 are rotated to longitudinally move the separating movers 73,75 carriages 13, 15) in their return strokes. Thus by reciprocating the carriages 13, 15 many times the pieces of dough W of the groups WG are separated group-by-group.

While the carriages 13, 15 reciprocate many times, rotating the multiple cams 81 and separating cams 67 causes the rotating movers 85 to reciprocate vertically. As explained above, the screw members 45 are threaded in the nuts 17, and the movers 85 vertically reciprocate once while the separating movers 73, 75 reciprocate twice. Thus the holders 19, 23 rotate substantially through 90 degrees while the direction that they rotate changes per forward stroke of the carriages 13, 15 in phase with the forward stroke. Thus the bases of the pieces of dough are caused to face downstream in the staggered layout and are received by the positioning plates 111 above the downstream conveyor 5.

## Claims

1. A method of conveying pieces of dough (W), each of which has a base side (Wb), by means of an upstream conveyor (3) and a longitudinally adjacent downstream conveyor (5), the dough pieces being arranged in contiguous transverse rows on the upstream conveyor with the base sides (Wb) of the dough pieces facing in opposite transverse directions in each successive row, the method including the step of sequentially conveying the dough pieces row by row from a discharge end of the upstream conveyor to a receiving end of the downstream conveyor;
**characterised by** the steps of separating each transverse row of dough pieces from the succeeding rows as the rows are being conveyed to the said receiving end, while simultaneously arranging the dough pieces of said separated row in a transversely staggered layout and rotating them through substantially 90 degrees so that the said base of each dough piece faces downstream.

2. Apparatus for conveying pieces of dough (W), each of which has a base side (Wb), from an upstream conveyor (3) on which the dough pieces are arranged in contiguous transverse rows with the base sides of the dough pieces facing in opposite transverse directions in each successive row, to a longitudinally adjacent downstream conveyor (5), the apparatus comprising:
a first carriage (13) and a second carriage (15) mounted for longitudinal movement at the junction of the said upstream and downstream conveyors;
means (17) for longitudinally reciprocating the said first and second carriages in phase such that the reciprocating strokes of the first carriage are longer than those of the second carriage;
first holders (19) mounted on the said first carriage for rotation about a vertical axis to hold and rotate a piece of dough;
second holders (23), mounted on the said second carriage for rotation about a vertical axis to hold and rotate a piece of dough;
and a rotating mechanism (45,47) for rotating the said first and second holders through substantially 90 degrees;
**characterised in that** the said first holders are mounted on one side of the said first carriage to hold and rotate some of the pieces of dough of each row while the said second holders are mounted on one side of the said second carriage to hold and rotate the remaining pieces of the dough of the row, the said first and second holders being transversely aligned;
and the said rotating mechanism being arranged to rotate the said first and second holders through substantially 90 degrees in opposite directions per forward stroke of the first and second holders while the first and second carriages are longitudinally reciprocated a plurality of times, so that each row is separated from the succeeding rows and simultaneously the dough pieces of each said separated row are separated from each other and positioned in a transversely staggered layout while being rotated through substantially 90 degrees in opposite directions row by row.

3. Apparatus as claimed in claim 2, wherein the said means (17) for longitudinally reciprocating the first and second carriages (13,15) includes separating cams (67) arranged to be rotated by a drive motor (77) about longitudinally extending respective axes of rotation (65), first separating movers (73) connected to the first carriage and arranged for longitudinal movement by the rotation of the separating cams, and second separating movers (75) connected to the second carriage and arranged for longitudinal movement by the rotation of the separating cams, the longitudinal reciprocating strokes of the first separating movers being longer than those of the second separating movers so that the longitudinal reciprocating strokes of the first carriage are longer than those of the second carriage.

4. Apparatus as claimed in claim 3, wherein the separating cams (67) are cylindrical groove cams having cylindrical outer surfaces in which first separating cam grooves (69) for movably receiving the first separating movers (73) and second separating cam grooves (71) for movably receiving the second separating movers (75) are formed, the said first and second separating cam grooves being shaped such that the longitudinal reciprocating strokes of the first separating movers are longer than those of the second separating movers.

5. Apparatus as claimed in claim 3 or 4, wherein a screw member (45) is securely attached to each said holder (19,23), a nut (47) mounted for vertical movement is threaded on each said screw member, and the said nuts are connected by a connecting bar (49,51), and
wherein the means for longitudinally reciprocating the first and second carriages includes rotating cams (81) concentrically and fixedly attached to the said separating cams (67) and rotating movers (85) connected to the said connecting bar to be moved vertically by the rotation of the rotating cams in such manner that the rotating movers vertically reciprocate once while the separating movers (73,75) longitudinally reciprocate twice.

6. Apparatus as claimed in claim 5, wherein the said rotating cams (81) are plane groove cams having cam grooves (83) at their sides for movably receiving the said rotating movers (85), the plane groove cams being shaped such that the rotating movers rotate vertically while the separating movers (73,75) are reciprocated longitudinally twice.

7. Apparatus as claimed in claim 6, wherein the said rotating cam grooves (83) are shaped such that during the two longitudinal reciprocating strokes of the said separating movers (73,75) the said rotating movers (85) move vertically from a return stroke end of a forward stroke thereof to the middle of the forward stroke, and the rotating cam grooves move vertically from a forward stroke end of a return stroke thereof to the middle of the return stroke by the time the separating movers start the second forward strokes thereof and reach the stroke ends of the said second forward strokes.

8. Apparatus as claimed in any of claims 2 to 7, wherein the said holders (19,23) are arranged to hold the pieces of dough (W) from above before the said carriages (13,15) start their longitudinal lateral forward strokes from a return stroke end thereof and to release the pieces of dough before the carriages start their longitudinal return strokes from a forward stroke end thereof.

9. Apparatus as claimed in any of claims 2 to 8, wherein each said holder (19,23) includes a pin-operating device comprising a support pipe (27) rotatably mounted on the associated carriage (13,15), an ejector (29) mounted on the lower portion of the support pipe, a pin rod (31) mounted for vertical movement in the support pipe, penetrating pins (33) attached to a lower portion of the pin rod for penetrating a dough piece (W), the penetrating pins being ejectable and retractable from the ejector, and a connecting bar (35, 37) connecting the pin rods of the holders; wherein the said penetrating pins are arranged to be projected downward from the ejector by lowering the said connecting bar before the carriages start their longitudinal forward strokes from a return stroke end thereof, and to be retracted upward into the ejector by raising the connecting bar before the carriages start their longitudinal return strokes from a forward stroke end thereof.

10. Apparatus as claimed in claims 5 and 9, wherein the said pin-operating device includes a pin cam (81) concentrically and fixedly attached to the said separating cam (67), and pin movers (85) connected to the connecting bars (49,51) for pin rods for vertical movement by the rotation of the said pin cam, wherein the pin movers are arranged to move downward before the separating movers start their longitudinal return strokes from a return stroke end thereof, and to move upward before the separating movers start their longitudinal forward strokes from a forward stroke end thereof.

11. Apparatus as claimed in claim 10, wherein the said pin cam (81) is a plane groove cam for a pin, shaped so that the pin movers move downward before the separating movers start their longitudinal forward strokes from a return stroke end thereof, and move upward before the separating movers start their longitudinal return strokes from a forward stroke end thereof.

12. Apparatus as claimed in any of claims 2 to 11, wherein an arranging device is mounted at the downstream of the said carriages (13,15) for arranging pieces of dough of each group in a transversely and staggered layout.

13. Apparatus as claimed in claim 12, wherein the said arranging device includes a rotating bar (109) extending transversely for vertical rotation and a plurality of arranging plates (111) mounted on the rotating bar in a transversely staggered layout, wherein the rotating bar is vertically rotatable while being connected to the separating cams (67) and in unison with the rotation of the separating cams.

## Patentansprüche

1. Verfahren zum Transportieren von Teigstücken (W), von denen jedes eine Basisseite (Wb) aufweist, mittels eines stromaufwärtigen Förderers (3) und eines in Längsrichtung benachbarten, stromabwärtigen Förderers (5), wobei die Teigstücke in aneinander grenzenden Querreihen auf dem stromaufwärtigen Förderer so angeordnet sind, dass die Basisseiten (Wb) der Teigstücke in entgegengesetzte Querrichtungen in jeder nachfolgenden Reihe weisen, wobei das Verfahren den Schritt aufweist, die Teigstücke reihenweise von einem Austragende des stromaufwärtigen Förderers zu einem Aufnahmeende des stromabwärtigen Förderers sequenziell zu transportieren,
**gekennzeichnet durch** die Schritte: Trennen jeder Querreihe von Teigstücken von den nachfolgenden Reihen, wenn die Reihen zu dem Aufnahmeende transportiert werden, während gleichzeitig die Teigstücke der getrennten Reihe in einer in Querrichtung versetzten Anordnung angeordnet werden, und während sie im Wesentlichen um 90 Grad derart gedreht werden, dass die Basis von jedem Teigstück abwärts weist.

2. Vorrichtung zum Transportieren von Teigstücken (W), von denen jedes eine Basisseite (Wb) aufweist, von einem stromaufwärtigen Förderer (3), auf dem die Teigstücke in aneinander grenzenden Querreihen angeordnet sind, wobei die Basisseiten der Teigstücke in entgegengesetzte Querrichtungen in jeder nachfolgenden Reihe weisen, zu einem in Längsrichtung verlaufenden, benachbarten, stromabwärtigen Förderer (5), wobei die Vorrichtung aufweist:
Einen ersten Schlitten (13) und einen zweiten Schlitten (15), die zu Gunsten einer Längsbewegung an der Verbindungsstelle der stromaufwärtigen und stromabwärtigen Förderer angebracht sind,
eine Einrichtung (17) zum Hin- und Herbewegen der ersten und zweiten Schlitten in Längsrichtung in Phase derart, dass die Hin- und Herbewegungshübe des ersten Schlittens länger als diejenigen des zweiten Schlittens sind,
erste Halter (19), die auf dem ersten Schlitten zur Drehung um eine vertikale Achse angebracht sind, um ein Teigstück zu halten und zu drehen,
zweite Halter (23), die auf dem zweiten Schlitten zur Drehung um eine vertikale Achse angebracht sind, um ein Teigstück zu halten und zu drehen,
und einen Drehmechanismus (45, 47) zum Drehen der ersten und zweiten Halter um im Wesentlichen 90 Grad,
**dadurch gekennzeichnet, dass** die ersten Halter auf einer Seite des ersten Schlittens angebracht sind, um einige der Teigstücke von jeder Reihe zu halten und zu drehen, während die zweiten Halter auf einer Seite des zweiten Schlittens angebracht sind, um die restlichen Teigstücke der Reihe zu halten und zu drehen, wobei die ersten und zweiten Halter in Querrichtung fluchten,
und dass der Drehmechanismus so angeordnet ist, dass er die ersten und zweiten Halter um im Wesentlichen 90 Grad in entgegengesetzten Richtungen pro Vorwärtshub der ersten und zweiten Halter dreht, während die ersten und zweiten Schlitten mehrmals in Längsrichtung hin und her bewegt werden, so dass jede Reihe von der nachfolgenden Reihe getrennt wird, wobei die Teigstücke von jeder Reihe gleichzeitig voneinander getrennt und in einer in Querrichtung versetzten Anordnung positioniert werden, während sie um im Wesentlichen 90 Grad in entgegengesetzten Richtungen reihenweise gedreht werden.

3. Vorrichtung nach Anspruch 2, wobei die Einrichtung (17) zum Hin- und Herbewegen der ersten und zweiten Schlitten (13, 15) in Längsrichtung Trennnocken (67) aufweist, die so angeordnet sind, dass sie durch einen Antriebsmotor (77) um in Längsrichtung verlaufende, jeweilige Drehachsen (65) gedreht werden, erste Trennbeweger (73), die mit dem ersten Schlitten verbunden und für eine Längsbewegung angeordnet sind durch die Drehung der Trennnocken, und zweite Trennbeweger (75), die mit dem zweiten Schlitten verbunden und für eine Längsbewegung durch die Drehung der Trennnocken angeordnet sind, wobei die in Längsrichtung verlaufenden Hin- und Herbewegungshübe der ersten Trennbeweger länger sind als diejenigen der zweiten Trennbeweger, so dass die in Längsrichtung verlaufenden Hin- und Herbewegungshübe des ersten Schlittens länger sind als diejenigen des zweiten Schlittens.

4. Vorrichtung nach Anspruch 3, wobei die Trennnocken (67) zylindrische Nutnocken sind, die zylindrische Außenseiten aufweisen, in denen die ersten Trennnockennuten (69) zum beweglichen Aufnehmen der ersten Trennbeweger (73) und zweite Trennnockennuten (71) zum beweglichen Aufnehmen der zweiten Trennbeweger (75) gebildet sind, wobei die ersten und zweiten Trennnockennuten so geformt sind, dass die in Längsrichtung verlaufenden Hin- und Herbewegungshübe der ersten Trennbeweger länger sind als diejenigen der zweiten Trennbeweger.

5. Vorrichtung nach Anspruch 3 oder 4, wobei ein Schneckenelement (45) an jedem Halter (19, 23) fest angebracht ist, wobei eine Mutter (47), die für eine Vertikalbewegung angebracht ist, auf jedes Schraubenelement geschraubt ist, und wobei die Muttern durch eine Verbindungsstange (49, 51) verbunden sind, und
wobei die Einrichtung zum Hin- und Herbewegen der ersten und zweiten Schlitten in Längsrichtung Drehnocken (81) aufweist, die an den Trennnocken (67) konzentrisch und fest angebracht sind, und Drehbeweger (85), die mit der Verbindungsstange verbunden sind, um durch die Drehung der Drehnocken derart in vertikaler Richtung bewegt zu werden, dass die Drehbeweger einmal in vertikaler Richtung hin- und herlaufen, während die Trennbeweger (73, 75) zweimal in Längsrichtung hin- und herlaufen.

6. Vorrichtung nach Anspruch 5, wobei die Drehnocken (81) ebene Nocken sind, die Nockennuten (83) an ihren Seiten zum beweglichen Aufnehmen der Drehbeweger (85) aufweisen, wobei die ebenen Nutnocken so geformt sind, dass die Drehbeweger sich vertikal drehen, während die Trennbeweger (73, 75) in Längsrichtung zweimal hin und her bewegt werden.

7. Vorrichtung nach Anspruch 6, wobei die Drehnockennuten (83) so geformt sind, dass während der zwei in Längsrichtung verlaufenden Hin- und Herbewegungshübe der Trennbeweger (73, 75) die Drehbeweger (85) sich in vertikaler Richtung von einem Rückstellhubende eines Vorwärtshubs in die Mitte des Vorwärtshubs bewegen, wobei die Drehnockennuten sich in vertikaler Richtung von einem Vorwärtshubende eines Rückstellhubs in die Mitte des Rückstellhubs zu dem Zeitpunkt bewegen, zu dem die Trennbeweger die zweiten Vorwärtshübe beginnen und die Hubenden der zweiten Vorwärtshübe erreichen.

8. Vorrichtung nach einem der Ansprüche 2 bis 7, wobei die Halter (19, 23) so angeordnet sind, dass sie die Teigstücke (W) von oben halten, bevor die Schlitten (13, 15) ihre in Längsrichtung verlaufenden, seitlichen Vorwärtshübe, ausgehend von einem Rückstellhubende, beginnen, und dass sie die Teigstücke freigeben, bevor die Schlitten ihre in Längsrichtung verlaufenden Rückstellhübe, ausgehend von einen Vorwärtshubende, beginnen.

9. Vorrichtung nach einem der Ansprüche 2 bis 8, wobei jeder Halter (19, 23) eine Zapfenbetätigungseinrichtung umfasst, die ein Tragrohr (27) aufweist, das auf bzw. an dem zugeordneten Schlitten (13, 15) drehbar angebracht ist, einen Auswerfer (29), der am unteren Abschnitt des Tragrohrs angebracht ist, eine Zapfenstange (31), die für eine Vertikalbewegung in dem Tragrohr angebracht ist, Eindringzapfen (33), die am unteren Abschnitt der Zapfenstange angebracht sind, um in ein Teigstück (W) einzudringen, wobei die Eindringzapfen aus dem Auswerfer ausfahrbar und in diesen rückziehbar sind, und eine Verbindungsstange (35, 37), die die Zapfenstangen der Halter verbindet, wobei die Eindringzapfen so angeordnet sind, dass sie von dem Auswerfer nach unten vorstehen durch Absenken der Verbindungsstange, bevor die Schlitten mit ihren in Längsrichtung verlaufenden Vorwärtshüben, ausgehend von einem Rückstellhubende, beginnen, und dass sie in Aufwärtsrichtung in den Auswerfer zurückgezogen werden durch Anheben der Verbindungsstange, bevor die Schlitten ihre in Längsrichtung verlaufenden Rückstellhübe, ausgehend von einem Vorwärtshubende, beginnen.

10. Vorrichtung nach Anspruch 5 und 9, wobei die Zapfenbetätigungseinrichtung eine Zapfennocke (81) umfasst, die an der Trennnocke (67) konzentrisch und feststehend angebracht ist, und Zapfenbeweger (85), die mit den Verbindungsstangen (49, 51) für Zapfenstangen für eine vertikale Bewegung durch die Drehung der Zapfennocke verbunden sind, wobei die Zapfenbeweger so angeordnet sind, dass sie sich abwärts bewegen, bevor die Trennbeweger ihre in Längsrichtung verlaufenden Rückstellhübe, ausgehend von einem Rückstellhubende, beginnen, und dass sie sich in Aufwärtsrichtung bewegen, bevor die Trennbeweger ihre in Längsrichtung verlaufenden Vorwärtshübe, ausgehend von einem Vorwärtshubende, beginnen.

11. Vorrichtung nach Anspruch 10, wobei die Zapfennocke (81) eine ebene Nutnocke für einen Zapfen ist, die so geformt ist, dass die Zapfenbeweger in Abwärtsrichtung bewegt werden, bevor die Trennbeweger ihre in Längsrichtung verlaufenden Vorwärtshübe, ausgehend von einem Rückstellhubende, beginnen, und dass sie sich in Aufwärtsrichtung bewegen, bevor die Trennbeweger ihre in Längsrichtung verlaufenden Rückstellhübe, ausgehend von einem Vorwärtshubende, beginnen.

12. Vorrichtung nach einem der Ansprüche 2 bis 11, wobei eine Anordnungseinrichtung stromabwärts von den Schlitten (13, 15) angebracht ist, um Teigstücke von jeder Gruppe in Querrichtung sowie mit versetzter Anordnung anzuordnen.

13. Vorrichtung nach Anspruch 12, wobei die Anordnungseinrichtung eine Drehstange (109) umfasst, die sich in Querrichtung für eine vertikale Richtung erstreckt, und mehrere Anordnungsplatten (111), die auf bzw. an der Drehstange in einer in Querrichtung verlaufenden, versetzten Anordnung angebracht sind, wobei die Drehstange vertikal drehbar ist, während sie mit den Trennnocken (67) verbunden ist, sowie im Einklang mit der Drehung der Trennnocken.

## Revendications

1. Procédé pour transporter des morceaux de pâte (W), ayant chacun une face de base (Wb), au moyen d'un convoyeur amont (3) et d'un convoyeur aval (5) adjacent en direction longitudinale, les morceaux de pâte étant disposés en rangées transversales contiguës sur le convoyeur amont avec les faces de base (Wb) des morceaux de pâte orientées dans des directions transversales opposées dans chaque rangée successive, le procédé comprenant l'étape consistant à transporter séquentiellement les morceaux de pâte, rangée par rangée, à partir d'une extrémité de décharge du convoyeur amont, vers une extrémité de réception du convoyeur aval;
**caractérisé par** les étapes consistant à séparer chacune des rangées transversales de morceaux de pâte par rapport aux rangées suivantes, pendant que les rangées sont transportées vers l'extrémité de réception, tout en effectuant simultanément les opérations consistant à disposer les morceaux de pâte de la rangée séparée en une configuration décalée transversalement et à les faire tourner sur pratiquement 90 degrés de façon que la base de chaque morceau de pâte soit placée face à l'aval.

2. Appareil pour transporter des morceaux de pâte (W), chacun d'eux ayant une face de base (Wb), à partir d'un convoyeur amont (3) sur lequel les morceaux de pâte sont disposés en rangées transversales contiguës, avec les faces de base des morceaux de pâte orientées dans des directions transversales opposées dans chaque rangée successive, vers un convoyeur aval (5) adjacent en direction longitudinale, l'appareil comprenant :
un premier chariot (13) et un second chariot (15) montés pour accomplir un mouvement longitudinal à la jonction des convoyeurs amont et aval;
des moyens (17) pour communiquer un mouvement de va-et-vient longitudinal aux premier et second chariots, en phase, de façon que les courses de va-et-vient du premier chariot soient plus longues que celles du second chariot;
des premiers moyens de maintien (19) montés sur le premier chariot de façon à tourner autour d'un axe vertical pour maintenir et faire tourner un morceau de pâte;
des seconds moyens de maintien (23), montés sur le second chariot pour tourner autour d'un axe vertical, de façon à maintenir et à faire tourner un morceau de pâte;
et un mécanisme de rotation (45, 47) pour faire tourner les premiers et seconds moyens de maintien sur pratiquement 90 degrés;
**caractérisé en ce que** les premiers moyens de maintien sont montés sur un côté du premier chariot pour maintenir et faire tourner certains des morceaux de pâte de chaque rangée, tandis que les seconds moyens de maintien sont montés sur un côté du second chariot pour maintenir et faire tourner les morceaux de pâte restants de la rangée, les premiers et seconds moyens de maintien étant alignés transversalement;
et le mécanisme de rotation étant adapté pour faire tourner les premiers et seconds moyens de maintien sur pratiquement 90 degrés dans des directions opposées, pour chaque course en avant des premiers et seconds moyens de maintien pendant que les premier et second chariots sont déplacés longitudinalement plusieurs fois avec un mouvement de va-et-vient, de façon que chaque rangée soit séparée des rangées suivantes et que, simultanément, les morceaux de pâte de chaque rangée séparée soient séparés les uns des autres et positionnés en une configuration décalée transversalement, tout en étant tournés sur pratiquement 90 degrés dans des directions opposées, rangée par rangée.

3. Appareil selon la revendication 2, dans lequel lesdits moyens (17) pour communiquer un mouvement de va-et-vient longitudinal aux premier et second chariots (13, 15) comprennent des cames de séparation (67) adaptées pour être tournées par un moteur d'entraînement (77) autour d'axes de rotation (65) respectifs s'étendant longitudinalement, des premiers organes de déplacement séparateurs (73) accouplés au premier chariot et adaptés pour effectuer un mouvement longitudinal sous l'effet de la rotation des cames de séparation, et des seconds organes de déplacement séparateurs (75) accouplés au second chariot et adaptés pour effectuer un mouvement longitudinal sous l'effet de la rotation des cames de séparation, les courses longitudinales de va-et-vient des premiers organes de déplacement séparateurs étant plus longues que celles des seconds organes de déplacement séparateurs, de façon que les courses longitudinales de va-et-vient du premier chariot soient plus longues que celles du second chariot.

4. Appareil selon la revendication 3, dans lequel les cames de séparation (67) sont des cames à rainures cylindriques ayant des surfaces extérieures cylindriques dans lesquelles sont formées des premières rainures de came de séparation (69) pour recevoir de façon mobile les premiers organes de déplacement séparateurs (73), et des secondes rainures de came de séparation (71) pour recevoir de façon mobile les seconds organes de déplacement séparateurs (75), les premières et secondes rainures de came de séparation ayant une forme telle que les courses longitudinales de va-et-vient des premiers organes de déplacement séparateurs soient plus longues que celles des seconds organes de déplacement séparateurs.

5. Appareil selon la revendication 3 ou 4, dans lequel une vis (45) est fixée fermement à chacun des moyens de maintien (19, 23), un écrou (47) monté pour accomplir un mouvement vertical est vissé sur chacune des vis, et les écrous sont accouplés par une barre d'accouplement (49, 51), et
dans lequel les moyens pour communiquer un mouvement de va-et-vient longitudinal aux premier et second chariots comprennent des cames tournantes (81) montées de façon fixe et concentrique sur les cames de séparation (67), et des organes de déplacement tournants (85) accouplés à la barre d'accouplement pour être déplacés verticalement par la rotation des cames tournantes, d'une manière telle que les organes de déplacement tournants accomplissent un seul mouvement de va-et-vient en direction verticale pendant que les organes de déplacement séparateurs (73, 75) accomplissent deux mouvements de va-et-vient en direction longitudinale.

6. Appareil selon la revendication 5, dans lequel les cames tournantes (81) sont des cames à rainure planes ayant des rainures de cames (83) sur leurs faces pour recevoir de façon mobile les organes de déplacement tournants (85), les cames à rainure planes ayant une forme telle que les organes de déplacement tournants tournent verticalement pendant que les organes de déplacement séparateurs (73, 75) accomplissent deux fois un mouvement de va-et-vient longitudinal.

7. Appareil selon la revendication 6, dans lequel les rainures (83) des cames tournantes ont une forme telle que pendant les deux courses de va-et-vient en direction longitudinale des organes de déplacement séparateurs (73, 75), les organes de déplacement tournants (85) se déplacent verticalement à partir d'une extrémité de course de retour d'une course en avant de ces organes, jusqu'au milieu de la course en avant, et les rainures de came tournantes se déplacent verticalement à partir d'une extrémité de course en avant d'une course de retour de ceux-ci, jusqu'au milieu de la course de retour, au moment où les organes de déplacement séparateurs commencent leurs secondes courses en avant et atteignent les extrémités de course de ces secondes courses en avant.

8. Appareil selon l'une quelconque des revendications 2 à 7, dans lequel les moyens de maintien (19, 23) sont adaptés pour maintenir les morceaux de pâte (W) par le dessus, avant que les chariots (13, 15) commencent leurs courses en avant latérales longitudinales, à partir d'une extrémité de course de retour de ceux-ci, et pour relâcher les morceaux de pâte avant que les chariots commencent leurs courses de retour longitudinales à partir d'une extrémité de course en avant de ceux-ci.

9. Appareil selon l'une quelconque des revendications 2 à 8, dans lequel chacun des moyens de support (19, 23) comprend un dispositif d'actionnement à doigts comprenant un tube de support (27) monté de façon tournante sur le chariot associé (13, 15), un éjecteur (29) monté sur la partie inférieure du tube de support, une tige porte-doigts (31) montée pour accomplir un mouvement vertical dans le tube de support, des doigts de pénétration (33) fixés à une partie inférieure de la tige porte-doigts pour pénétrer dans un morceau de pâte (W) , les doigts de pénétration pouvant être éjectés et rétractés à partir de l'éjecteur, et une barre d'accouplement (35, 37) accouplant les tiges porte-doigts des moyens de maintien; dans lequel les doigts de pénétration sont adaptés pour être projetés vers le bas à partir de l'éjecteur par l'abaissement de la barre d'accouplement avant que les chariots commencent leurs courses en avant longitudinales, à partir d'une extrémité de course de retour de ceux-ci, et pour être rétractés vers le haut à l'intérieur de l'éjecteur par l'élévation de la barre d'accouplement avant que les chariots commencent leurs courses de retour longitudinales à partir d'une extrémité de course en avant de ceux-ci.

10. Appareil selon les revendications 5 et 9, dans lequel le dispositif d'actionnement à doigts comprend une came pour doigt (81) montée de façon fixe et concentrique sur la came de séparation (67), et des organes de déplacement de doigts (85) accouplés aux barres d'accouplement (49, 51) pour des tiges porte-doigts, pour accomplir un mouvement vertical sous l'effet de la rotation de la came pour doigt, dans lequel les organes de déplacement de doigts sont adaptés pour se déplacer vers le bas avant que les organes de déplacement séparateurs commencent leurs courses de retour longitudinales à partir d'une extrémité de course de retour de ceux-ci, et pour se déplacer vers le haut avant que les organes de déplacement séparateurs commencent leurs courses en avant longitudinales à partir d'une extrémité de course en avant de ceux-ci.

11. Appareil selon la revendication 10, dans lequel la came pour doigt (81) est une came à rainure plane pour un doigt, ayant une forme telle que les organes de déplacement de doigts se déplacent vers le bas avant que les organes de déplacement séparateurs commencent leurs courses en avant longitudinales à partir d'une extrémité de course de retour de ceux-ci, et se déplacent vers le haut avant que les organes de déplacement séparateurs commencent leurs courses de retour longitudinales à partir d'une extrémité de course en avant de ceux-ci.

12. Appareil selon l'une quelconque des revendications 2 à 11, dans lequel un dispositif de mise en place est monté en aval des chariots (13, 15) pour mettre en place des morceaux de pâte de chaque groupe selon une configuration décalée transversalement.

13. Appareil selon la revendication 12, dans lequel le dispositif de mise en place comprend une barre tournante (109) s'étendant transversalement pour effectuer une rotation verticale et une pluralité de plaques de mise en place (111) montées sur la barre tournante en une configuration décalée transversalement, dans lequel la barre tournante peut tourner verticalement tout en étant accouplée aux cames de séparation (67), et en concordance avec la rotation des cames de séparation.
